# EUROPÄISCHE PATENTSCHRIFT

(11) **EP 3 411 585 B1**
(45) Veröffentlichungstag und Bekanntmachung des Hinweises auf die Patenterteilung: **30.09.2020**
(21) Anmeldenummer: 17703381.8
(22) Anmeldetag: 02.02.2017
(51) Int. Cl.: F02F 3/02, F02F 3/00, F01P 3/10, B21K 1/18, F02F 3/22, B22C 9/02

(54) **KOLBEN AUS STAHL- ODER GRAUGUSS FÜR EINEN VERBRENNUNGSMOTOR UND VERFAHREN ZUR HERSTELLUNG EINES KOLBENS DURCH STAHL- ODER GRAUGUSS**
PISTON MADE OF CAST STEEL OR GRAY CAST IRON FOR AN INTERNAL COMBUSTION ENGINE, AND METHOD FOR MANUFACTURING A PISTON USING STEEL CASTING OR GRAY IRON CASTING
PISTON EN ACIER MOULÉ OU EN FONTE GRISE POUR UN MOTEUR À COMBUSTION INTERNE ET PROCÉDÉ DE FABRICATION D'UN PISTON EN ACIER MOULÉ OU EN FONTE GRISE

(30) Priorität: 03.02.2016 DE 102016201628
(43) Veröffentlichungstag der Anmeldung: 12.12.2018
(73) Patentinhaber: Federal-Mogul Nürnberg GmbH, 90441 Nürnberg (DE)
(72) Erfinder: KENNINGLEY, Scott, Cheshire SK8 7HS (GB); CROMME, Wolfram, 90559 Ezelsdorf (DE); MORGENSTERN, Roman, 91560 Heilsbronn (DE); HOPP, Georg, 91126 Rednitzhembach (DE); FRÖDE, Kay, 90547 Stein (DE); UNGERMANN, Sven, 90403 Nürnberg (DE); MERGLER, Harald, 90411 Nürnberg (DE)
(74) Vertreter: Hoffmann Eitle
(86) Internationale Anmeldenummer: PCT/EP2017/052235
(87) Internationale Veröffentlichungsnummer: WO 2017/134155

(56) Entgegenhaltungen:
- EP-A1- 0 563 408
- EP-A1- 2 541 004
- DE-A1- 4 340 891
- DE-A1- 19 908 670
- DE-A1-102007 020 447
- DE-A1-102009 032 379
- DE-A1-102013 009 155
- DE-A1-102014 211 350
- JP-A- 2000 039 066
- JP-U- H0 667 838
- US-A1- 2012 145 112

## Beschreibung

### TECHNISCHES GEBIET

Die Erfindung betrifft einen Kolben aus Stahl- oder Grauguss für einen Verbrennungsmotor mit einem Kühlkanal, Schaftwänden und Verbindungswänden zwischen den Schaftwänden, sowie ein Verfahren zur Herstellung eines Kolbens durch Stahl- oder Grauguss.

### STAND DER TECHNIK

Als Kolben für Verbrennungsmotoren sind zahlreiche gegossene Leichtmetallkolben bekannt, die einen oder mehrere Kühlkanäle aufweisen können. Zur Abstützung an den Zylinderwänden oder einer Zylinderlaufbuchse sind gegenüberliegende Schaftwände vorgesehen, die im Wesentlichen Abschnitte einer Zylindermantelfläche sind. Die Schaftwände sind durch sogenannte Verbindungswände verbunden, in denen Kolbenbolzennaben für die Aufnahme eines Kolbenbolzens vorgesehen sind, der sich durch das Auge eines zwischen den Verbindungswänden aufgenommenen Pleuels erstreckt.

Ein gegossener Stahlkolben mit den oben genannten Merkmalen ist aus der CN 102979641 A bekannt. Die DE 10 2013 099 155 A1 betrifft den Oberbegriff der Ansprüche 1 und 9.

DE19908670 A1 und DE102007020447 A1 offenbaren weitere Kolben für einen Verbrennungsmotor.

### DARSTELLUNG DER ERFINDUNG

Vor diesem Hintergrund liegt der Erfindung die Aufgabe zugrunde, einen verbesserten Kolben zu schaffen.

Die Lösung dieser Aufgabe erfolgt durch den Gegenstand des Anspruchs 1.

Demzufolge ist der erfindungsgemäße, einstückige Kolben aus Stahl- oder Grauguss zwischen Druck- und Gegendruckseite asymmetrisch. Mit anderen Worten sind die Schaft- und/oder Verbindungswände auf Druck- und Gegendruckseite unterschiedlich ausgebildet. Dies betrifft insbesondere die Breite der Schaftwände und/oder die Dicke und/oder die Erstreckung der Verbindungswände in Kolbenachsrichtung. Um den Anforderungen mit besonders einfachen Mitteln gerecht zu werden, kann beispielsweise die Breite der Schaftwand auf der Druckseite, also die Erstreckung der Schaftwand in Umfangsrichtung, größer sein, als auf der Gegendruckseite. In vorteilhafter Weise kann diese Gestaltung bereits beim Gießen des Rohlings für den erfindungsgemäßen Kolben vorgesehen werden, so dass die beschriebene Struktur mit geringem Aufwand herstellbar ist. Durch das Gießen kann insgesamt Gewicht eingespart werden. Ferner wird die Herstellung beispielsweise gegenüber herkömmlichen, zweiteiligen Stahlkolben, deren beide Teile beispielsweise durch Reibschweißen verbunden werden, wobei in diesem Zusammenhang auch ein Kühlkanal ausgebildet werden kann, vereinfacht und kann kostengünstiger gestaltet werden. Darüber hinaus sind die Gestaltungsmöglichkeiten durch den verwendeten Gießprozess äußerst vielfältig.

Dies betrifft insbesondere auch die Dicke der Verbindungswände, die auf der Druckseite deutlich größer, insbesondere bis zu dem dreifachen Wert der Dicke auf der Gegendruckseite sein kann. Schließlich kann die Erstreckung der Verbindungswände in Kolbenachsrichtung an die Druck- und Gegendruckseite angepasst vorgenommen werden. Insbesondere können an dem unteren Ende der Verbindungswände Ausnehmungen vorgesehen werden, um Gewicht einzusparen. Diese Vorteile lassen sich mit einer Kostenreduzierung gegenüber herkömmlichen, zweiteiligen Kolben erreichen. Dies geht beispielsweise auch deshalb, weil bei zweiteiligen, geschmiedeten und reibgeschweißten Kolben umfangreiche Nachbearbeitungen erforderlich sind, um Spannungen infolge der genannten Bearbeitungsvorgänge zu reduzieren.

Die Gestaltung der Verbindungswände sieht an ihrem vom Kolbenboden entfernt liegenden Ende, in Richtung der Kolbenbolzenachse betrachtet, einen Absatz und zumindest eine konkave Krümmung vor. Durch die Aussparung infolge der konkaven Krümmung kann Gewicht eingespart werden, und der Absatz kann in vorteilhafter Weise eine definierte Anordnung des Kolbens an einer Aufnahme zur Bearbeitung, beispielsweise durch Drehen, gewährleisten.

Für die auftretenden Belastungen hat es sich darüber hinaus als vorteilhaft erwiesen, dass sich zumindest eine Schaftwand in einer sich von dem Kolbenboden entfernenden Richtung verbreitert.

Vorteilhafte Weiterbildungen des erfindungsgemäßen Kolbens sind in den weiteren Ansprüchen beschrieben.

Ferner können die Belastungen besonders gut aufgenommen werden, wenn sich zumindest eine Schaftwand in Richtung zumindest einer Verbindungswand verdickt.

Gewicht kann in besonderem Maße dadurch eingespart werden, dass an der Unterseite des Kolbens gewissermaßen unterhalb des Kühlkanals, das heißt in Richtung der Kolbenachse weiter vom Kolbenboden entfernt als der Kühlkanal zumindest eine Ausnehmung ausgebildet ist. Mit anderen Worten kann sich die Ausnehmung innerhalb und/oder außerhalb der Verbindungswände an der genannten Stelle befinden.

Für die Aus- und Einlässe des Kühlkanals wird derzeit bevorzugt, dass zumindest ein Kühlkanaleinlass zumindest gleich groß oder größer ist als zumindest ein Kühlkanalauslass. Dies bietet Vorteile, beispielsweise, wenn in dem zugehörigen Motor schräge Öldüsen verbaut sind. Es kann jedoch Anwendungsfälle geben, bei denen zumindest ein Auslass größer ist als zumindest ein Einlass.

Für zumindest einen Kühlkanalauslass wird ferner bevorzugt, dass er einen Strömungsdiffusor aufweist. Hierbei handelt es sich im Wesentlichen um eine gerundete Rippe an der oberen Begrenzung des Kühlkanals, in etwa mittig über dem Kühlkanalauslass, so dass das heranströmende Kühlmittel in günstiger Weise in Richtung des Auslasses abgelenkt wird.

Für zumindest einen Kühlkanalein- und/oder -auslass wird ferner derzeit bevorzugt, dass er oval oder elliptisch geformt ist. Im Hinblick auf den Einlass kann hierdurch auch bei schrägstehenden Öldüsen sichergestellt werden, dass genügend Kühlmittel in den Kühlkanal eintritt. Im Hinblick auf den Auslass bietet ein vergleichsweise großer, oval oder elliptisch geformter Auslass den Vorteil, dass das erwärmte Kühlmittel den Kühlkanal sicher verlässt und das Nachströmen von kühlem, und somit zur Aufnahme von Wärme geeignetem Kühlmittel nicht behindert.

Es wird ferner bevorzugt, dass der erfindungsgemäße, Kolben zumindest eine Kolbenbolzennabe aufweist, die in einem oberen und/oder unteren und/oder in zumindest einem seitlichen Bereich eine Aushebenut für einen Sicherungsring aufweist. Diesbezüglich besteht ein besonderer Vorteil in der Herstellung durch Gießen darin, dass eine derartige Aushebenut bereits beim Gießen ausgebildet werden kann, und somit eine gesonderte Bearbeitung entfallen kann.

Für die weitere Gewichtseinsparung ist es darüber hinaus vorteilhaft, wenn zumindest eine Verbindungswand, bevorzugt auf der Gegendruckseite, zumindest eine Aussparung, mit anderen Worten eine Öffnung aufweist.

Die Erfindung betrifft ferner ein Verfahren zur Herstellung eines Kolbens, bei dem der vorangehend beschriebene Kolben durch Stahl- oder Grauguss ausgebildet wird. Hierdurch können die entsprechenden Vorteile erreicht werden, und es sei an dieser Stelle erwähnt, dass sämtliche vorangehend und nachfolgend lediglich im Zusammenhang mit dem Kolben genannten Merkmale bei dem erfindungsgemäß Verfahren angewendet werden können, und umgekehrt.

Die Eigenschaften des Kolbens im Hinblick auf die weitere Bearbeitung, die Ermüdungsfestigkeit und den Widerstand gegen thermomechanische Belastungen können in vorteilhafter Weise dadurch verbessert werden, dass der Kolben wärmebehandelt wird.

Für den bei der Herstellung zur Ausbildung des Kühlkanals verwendeten Kern hat es sich darüber hinaus als vorteilhaft erwiesen, wenn dieser Sand und/oder Wachs aufweist.

Ferner können die Eigenschaften des Kerns verbessert werden, wenn dieser beschichtet ist.

Für die Herstellung des Kerns wird ferner ein Press- oder ein additives oder generatives Herstellungsverfahren bevorzugt.

### KURZE BESCHREIBUNG DER ZEICHNUNGEN

Nachfolgend werden bevorzugte Ausführungsbeispiele der Erfindung unter Bezugnahme auf die Zeichnungen näher erläutert. Es zeigen:
- Fig. 1: einen erfindungsgemäßen Kolben in einer Seitenansicht in Richtung der Kolbenbolzenachse;
- Fig. 2: den erfindungsgemäßen Kolben in einer Seitenansicht in einer Richtung senkrecht zur Kolbenbolzenachse;
- Fig. 3: eine Unteransicht eines erfindungsgemäßen Kolbens; und
- Fig. 4: eine Schnittansicht eines erfindungsgemäßen Kolbens.

### AUSFÜHRLICHE BESCHREIBUNG BEVORZUGTER AUSFÜHRUNGSFORMEN DER ERFINDUNG

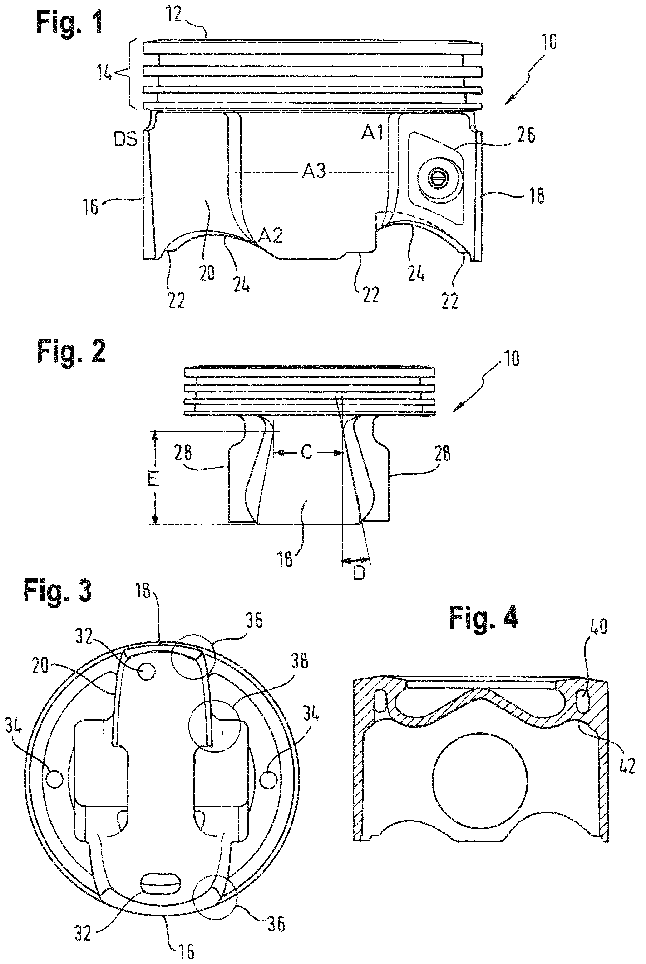

Wie in Fig. 1 zu erkennen ist, weist ein erfindungsgemäßer, einstückiger Kolben 10 einen Kolbenboden 12, ein Ringfeld 14, eine Schaftwand 16 auf der Druckseite (DS), eine Schaftwand 18 auf der Gegendruckseite und dazwischenliegende Verbindungswände 20 auf. In Fig. 1 sind mit A1, A2 und A3 Positionen angedeutet, an denen sich eine beim Gießen ausgebildete und deshalb besonders einfach herzustellende Aushebenut für einen Sicherungsring befinden kann, nämlich im Bereich der Oberseite (A1), im Bereich der Unterseite (A2) und/oder einem oder beiden seitlichen Bereichen (A3).

An den jeweiligen unteren Enden der Verbindungswände 20 ist in Fig. 1 ferner deren besondere Form zu erkennen. Sie weisen nämlich jeweils einen Absatz 22 und eine konkave Krümmung 24 auf. Die konkav gekrümmte Aussparung am unteren Ende der Verbindungswand erstreckt sich auf der Gegendruckseite höher, also weiter in Richtung des Kolbenbodens 12, als auf der Druckseite. Zur Fig. 1 sei ergänzend erwähnt, dass insbesondere zumindest eine Verbindungswand auf der Gegendruckseite zumindest eine Aussparung, mit anderen Worten eine Öffnung aufweisen kann, die in Fig. 1 mit 26 angedeutet ist. Zu der Kontur auf der Gegendruckseite sei ergänzend erwähnt, dass hier ein zweiter Absatz 22 nahe der Kolbenbolzennabe vorhanden ist. Ferner kann die Aussparung wie mit gestrichelten Linien angezeigt, bevorzugt lediglich auf der Gegendruckseite, vergrößert werden. Mit anderen Worten kann sich die Aussparung schräg nach oben in etwa in Richtung der Kolbenbolzenachse erstrecken.

Aus der Fig. 2 ist der erfindungsgemäße Kolben 10 in einer Seitenansicht oder in einer Richtung senkrecht zur Kolbenbolzenachse gezeigt, und es ist zu erkennen, dass die Schaftwand 18 auf der (zum Betrachter der Fig. 2 gerichteten) Gegendruckseite schmaler ist, als der Abstand zwischen den jeweils äußeren Rändern 28 der Kolbenbolzennaben. Es sei erwähnt, dass die schmalste Breite der Schaftwand 18 auf der Gegendruckseite beispielsweise bei einem Bereich von 0,22 bis 0,28 des Kolbendurchmessers liegen kann, während die entsprechende Breite auf der Druckseite bei 0,27 bis 0,33 liegen kann. Der Winkel D, mit dem sich die Schaftwand jeweils in Richtung des unteren Endes des Kolbens verbreitert, kann bei 0,08 bis 0,12 mal dem Kolbendurchmesser (angegeben in Grad) liegen, auf der Druckseite, während der Winkel auf der Gegendruckseite beispielsweise bei 0,03 bis 0,07 mal dem Kolbendurchmesser (angegeben in Grad) liegen kann. Die Abmessung E gemäß Fig. 2, d. h. die Entfernung zwischen dem unteren Ende der Schaftwand und dessen schmalster Stelle beträgt beispielsweise etwa 5 % des Produkts von Kolbenbolzendurchmesser und Kolbendurchmesser (in Millimeter angegeben), und 18 bis 22 % davon können am unteren Ende der Schaftwand so gestaltet sein wie in Fig. 2 gezeigt, nämlich dass sich die Breite hier verringert.

In Fig. 3 sind weitere Abmessungen zu erkennen. Beispielsweise kann die Dicke der Schaftwand 18 im Bereich der (in Fig. 3 vertikal verlaufenden) Mittelachse 2,0 bis 2,4 mm zuzüglich 1 % des Kolbendurchmessers betragen, während sich für die Druckseite 2,0 bis 2,4 mm zuzüglich 2 % des Kolbendurchmessers als vorteilhaft erwiesen haben. Die Verbindungswände 20 auf der Druckseite sind etwa 0,5 bis 1 mm dicker als die oben beschriebene Abmessung der Schaftwand 18 auf der Druckseite an der Kolbenmittelachse, und für die Gegendruckseite gilt ein Wert von etwa 0,15 bis 0,35 mm dicker als die Dicke der Schaftwand auf der Gegendruckseite im Bereich der Kolbenachse. Ferner erstrecken sich die Verbindungswände auf beiden Seiten in Richtung der Kolbenmittelachse voneinander divergierend, und auf der Druckseite sind sie in etwa bei einem Drittel der axialen Erstreckung (bezogen auf den Kolbenbolzen) der Bolzennabe von der Außenseite her angebunden, während diese Anbindung auf der Gegendruckseite etwa bei einem Drittel der genannten Bezugsgröße von der Innenseite her vorgesehen ist. An dieser Innenseite kann der Abstand zwischen den Kolbenbolzennaben im unteren Bereich (in Fig. 3 zu dem Betrachter gerichtet) geringer sein als im oberen Bereich.

In der Unteransicht von Fig. 3 ist ferner ein gekrümmt ovaler oder in gewisser Weise "bohnenförmiger" Kühlmittelauslass 30 zu erkennen, wobei sich ein Kühlmitteleinlass 32 gegenüber, mit anderen Worten innerhalb der jeweiligen Schaftwand 16 bzw. 18 befinden kann. In Bereichen "neben" den Kolbenbolzennaben können zusätzliche Kühlmittelauslässe 34 vorhanden sein. An dem jeweiligen Übergang 36 von der Schaftwand zu der Verbindungswand können die Schaft- und/oder Verbindungswand verdickt ausgeführt sein, und es kann in vorteilhafter Weise ein harmonischer Übergang vorgesehen sein, um jegliche Kerbwirkung zu vermindern. Dies gilt in gleicher Weise für den Bereich des Übergangs 38 zu den Kolbenbolzennaben.

In Fig. 4 ist in der Schnittdarstellung erstmalig der Kühlkanal 40 zu erkennen, unterhalb dessen eine Ausnehmung 42 vorgesehen ist, um hier Gewicht einzusparen. Wie ergänzend in der Unteransicht von Fig. 3 erkennbar ist, kann diese Ausnehmung auch außerhalb der Verbindungswände 20 vorgesehen sein, beispielsweise in denjenigen Bereichen, in denen die Kühlmittelauslässe 34 angedeutet sind sowie in Umfangsrichtung entlang des Ringfeldes 14 an der Innenseite des Kolbens. Wenn auf eine derartige Ausnehmung insbesondere innerhalb der Verbindungs- (und der Schaft-)Wände, wie in Fig. 4 zu erkennen, verzichtet wird, kann der Kühlkanal in vorteilhafter Weise in Richtung der Kolbenachse (in Fig. 4 vertikal) vergrößert werden.

## Patentansprüche

1. Kolben (10) aus Stahl- oder Grauguss für einen Verbrennungsmotor, mit einem Kühlkanal (40), Schaftwänden (16, 18) und Verbindungswänden (20) zwischen den Schaftwänden (16, 18),
wobei dieser im Hinblick auf die Breite (C) der Schaftwände (16, 18) und Dicke und Erstreckung der Verbindungswände (20) in Kolbenachsrichtung zwischen Druck- (DS) und Gegendruckseite asymmetrisch ist,
wobei zumindest eine Verbindungswand (20) an ihrem vom Kolbenboden (12) entfernt liegenden Ende in Richtung der Kolbenbolzenachse betrachtet zumindest einen Absatz (22) und zumindest eine konkave Krümmung (24) aufweist, und
wobei sich die konkav gekrümmte Aussparung am unteren Ende der Verbindungswand auf der Gegendruckseite weiter in Richtung des Kolbenbodens (12) erstreckt als auf der Druckseite,
wobei zumindest eine Schaftwand (16, 18) in einer sich von dem Kolbenboden (12) entfernenden Richtung verbreitert ist.

2. Kolben (10) für einen Verbrennungsmotor nach einem der vorangehenden Ansprüche,
**dadurch gekennzeichnet, dass**
zumindest eine Schaftwand (16, 18) in Richtung zumindest einer Verbindungswand (20) verdickt (36) ist.

3. Kolben (10) für einen Verbrennungsmotor nach einem der vorangehenden Ansprüche,
**dadurch gekennzeichnet, dass**
unterhalb des Kühlkanals (40), das heißt in Kolbenachsrichtung weiter von dem Kolbenboden (12) entfernt als der Kühlkanal (40) zumindest eine Ausnehmung (42) ausgebildet ist.

4. Kolben (10) für einen Verbrennungsmotor nach einem der vorangehenden Ansprüche,
**dadurch gekennzeichnet, dass**
zumindest ein Kühlkanaleinlass (32) gleich groß oder größer ist als zumindest ein Kühlkanalauslass (30).

5. Kolben (10) für einen Verbrennungsmotor nach einem der vorangehenden Ansprüche,
**dadurch gekennzeichnet, dass**
zumindest ein Kühlkanalauslass (30) einen Strömungsdiffusor aufweist.

6. Kolben (10) für einen Verbrennungsmotor nach einem der vorangehenden Ansprüche,
**dadurch gekennzeichnet, dass**
zumindest ein Kühlkanalauslass (30) oval oder elliptisch geformt ist.

7. Kolben (10) für einen Verbrennungsmotor nach einem der vorangehenden Ansprüche, ferner mit zumindest einer Kolbenbolzennabe, die in einem oberen Bereich (A1) und/oder einem unteren Bereich (A2) und/oder in zumindest einem seitlichen Bereich (A3) eine Aushebenut für einen Sicherungsring aufweist.

8. Kolben (10) für einen Verbrennungsmotor nach einem der vorangehenden Ansprüche,
**dadurch gekennzeichnet, dass**
zumindest eine Verbindungswand (20) zumindest eine Öffnung (26) aufweist.

9. Verfahren zur Herstellung eines Kolbens (10) für einen Verbrennungsmotor mittels Stahl- oder Grauguss mit einem Kühlkanal (40), Schaftwänden (16, 18) und Verbindungswänden (20) zwischen den Schaftwänden (16, 18),
wobei der Kolben derart gegossen wird, dass er im Hinblick auf die Breite der Schaftwände (16, 18) und Dicke und Erstreckung der Verbindungswände (20) in Kolbenachsrichtung zwischen Druck- und Gegendruckseite asymmetrisch ausgebildet wird, und
wobei an zumindest einer Verbindungswand (20) an ihrem vom Kolbenboden (12) entfernt liegenden Ende in Richtung der Bolzenachse betrachtet zumindest ein Absatz (22) und zumindest eine konkave Krümmung (24) ausgebildet wird, und
wobei sich die konkav gekrümmte Aussparung am unteren Ende der Verbindungswand auf der Gegendruckseite weiter in Richtung des Kolbenbodens (12) erstreckt als auf der Druckseite, und
wobei zumindest eine Schaftwand (16, 18) in einer sich von dem Kolbenboden (12) entfernenden Richtung verbreitert ist.

10. Verfahren nach Anspruch 9,
**dadurch gekennzeichnet, dass**
der Kolben wärmebehandelt wird.

11. Verfahren nach einem der Ansprüche 9 oder 10,
**dadurch gekennzeichnet, dass**
ein zur Herstellung des Kühlkanals (40) verwendeter Kern Sand und/oder Wachs aufweist.

12. Verfahren nach einem der Ansprüche 9 bis 10,
**dadurch gekennzeichnet, dass**
ein zur Herstellung des Kühlkanals (40) verwendeter Kern beschichtet ist.

13. Verfahren nach einem der Ansprüche 9 bis 12,
**dadurch gekennzeichnet, dass**
ein zur Herstellung des Kühlkanals (40) verwendeter Kern durch ein Press- oder ein additives oder generatives Herstellungsverfahren hergestellt wird.

## Claims

1. Piston (10) made of steel or grey cast iron for an internal combustion engine, with a cooling channel (40), shank walls (16, 18) and connecting walls (20) between the shank walls (16, 18),
wherein this is asymmetrical with respect to the width (C) of the shank walls (16, 18) and the thickness and extension of the connecting walls (20) in the direction of the piston axis between the pressure (DS) and counterpressure side,
wherein at least one connecting wall (20) has, at its end remote from the piston crown (12), viewed in the direction of the piston pin axis, at least one shoulder (22) and at least one concave curvature (24), and
wherein the concavely curved recess at the lower end of the connecting wall extends further in the direction of the piston crown (12) on the counterpressure side than on the pressure side,
wherein at least one shank wall (16, 18) is widened in a direction pointing away from the piston crown (12).

2. Piston (10) for an internal combustion engine according to one of the preceding claims,
**characterised in that** at least one shank wall (16, 18) is thickened (36) in the direction of at least one connecting wall (20).

3. Piston (10) for an internal combustion engine according to one of the preceding claims,
**characterised in that** at least one recess (42) is formed below the cooling channel (40), that is to say further away from the piston crown (12), in the direction of the piston axis, than the cooling channel (40).

4. Piston (10) for an internal combustion engine according to one of the preceding claims,
**characterised in that** at least one cooling channel inlet (32) is the same size as or larger than at least one cooling channel outlet (30).

5. Piston (10) for an internal combustion engine according to one of the preceding claims,
**characterised in that** at least one cooling channel outlet (30) has a flow diffuser.

6. Piston (10) for an internal combustion engine according to one of the preceding claims,
**characterised in that** at least one cooling channel outlet (30) is oval or elliptical in form.

7. Piston (10) for an internal combustion engine according to one of the preceding claims, further having at least one piston pin hub which has, in an upper region (A1) and/or a lower region (A2) and/or in at least one lateral region (A3), a lifting groove for a retaining ring.

8. Piston (10) for an internal combustion engine according to one of the preceding claims,
**characterised in that** at least one connecting wall (20) has at least one opening (26).

9. Method for manufacturing a piston (10) for an internal combustion engine with a cooling channel (40), shank walls (16, 18) and connecting walls (20) between the shank walls (16, 18) using steel casting or grey iron casting,
wherein the piston is cast such that it is asymmetrical with respect to the width of the shank walls (16, 18) and the thickness and extension of the connecting walls (20) in the direction of the piston axis between the pressure and counterpressure side, and
wherein at least one shoulder (22) and at least one concave curvature (24) is formed on at least one connecting wall (20), at its end remote from the piston crown (12), viewed in the direction of the piston pin axis, and
wherein the concavely curved recess at the lower end of the connecting wall extends further in the direction of the piston crown (12) on the counterpressure side than on the pressure side, and
wherein at least one shank wall (16, 18) is widened in a direction pointing away from the piston crown (12).

10. Method according to claim 9, **characterised in that** the piston is heat-treated.

11. Method according to one of the claims 9 or 10, **characterised in that** a core used to produce the cooling channel (40) comprises sand and/or wax.

12. Method according to one of the claims 9 to 10,
**characterised in that** a core used to produce the cooling channel (40) is coated.

13. Method according to one of the claims 9 to 12,
**characterised in that** a core used to produce the cooling channel (40) is manufactured by means of a pressing method or an additive or generative manufacturing method.

## Revendications

1. Piston (10) en acier coulé ou en fonte grise pour un moteur à combustion, avec un canal de refroidissement (40), des parois de jupe (16, 18) et des parois de liaison (20) entre les parois de jupe (16, 18),
dans lequel celui-ci est asymétrique par rapport à la largeur (C) des parois de jupe (16, 18) et l'épaisseur et l'étendue des parois de liaison (20) dans la direction axiale de l'axe de piston entre le côté pression (DS) et le côté contre-pression,
dans lequel au moins une paroi de liaison (20) présente au moins un épaulement (22) et au moins une courbure concave (24) à son extrémité éloignée du fond de piston (12), vue dans la direction de l'axe de piston, et
dans lequel l'évidement à courbure concave à l'extrémité inférieure de la paroi de liaison s'étend plus loin en direction du fond de piston (12) du côté contre-pression que du côté pression,
dans lequel au moins une paroi de jupe (16, 18) est élargie dans une direction s'éloignant du fond de piston (12).

2. Piston (10) pour un moteur à combustion selon l'une quelconque des revendications précédentes,
**caractérisé en ce que**
au moins une paroi de jupe (16, 18) est épaissie (36) dans la direction d'au moins une paroi de liaison (20).

3. Piston (10) pour un moteur à combustion selon l'une quelconque des revendications précédentes,
**caractérisé en ce que**
au moins un évidement (42) est réalisé sous le canal de refroidissement (40), c'est-à-dire plus loin du fond de piston (12) dans la direction axiale de l'axe de piston que le canal de refroidissement (40).

4. Piston (10) pour un moteur à combustion selon l'une quelconque des revendications précédentes,
**caractérisé en ce que**
au moins une entrée de canal de refroidissement (32) est égale ou supérieure à au moins une sortie de canal de refroidissement (30).

5. Piston (10) pour un moteur à combustion selon l'une quelconque des revendications précédentes,
**caractérisé en ce que**
au moins une sortie de canal de refroidissement (30) présente un diffuseur de flux.

6. Piston (10) pour un moteur à combustion selon l'une quelconque des revendications précédentes,
**caractérisé en ce que**
au moins une sortie de canal de refroidissement (30) ovale ou elliptique est formée.

7. Piston (10) pour un moteur à combustion selon l'une quelconque des revendications précédentes, avec en outre au moins un moyeu d'axe de piston, qui présente une rainure de soulèvement pour une bague d'arrêt dans une zone supérieure (A1) et/ou dans une zone inférieure (A2) et/ou dans au moins une zone latérale (A3).

8. Piston (10) pour un moteur à combustion selon l'une quelconque des revendications précédentes,
**caractérisé en ce que**
au moins une paroi de liaison (20) présente au moins une ouverture (26).

9. Procédé de fabrication d'un piston (10) pour un moteur à combustion au moyen d'acier coulé ou de fonte grise avec un canal de refroidissement (40), des parois de jupe (16, 18) et des parois de liaison (20) entre les parois de jupe (16, 18),
dans lequel le piston est coulé de sorte qu'il est réalisé de manière asymétrique par rapport à la largeur des parois de jupe (16, 18) et à l'épaisseur et à l'étendue des parois de liaison (20) dans la direction axiale de l'axe de piston entre le côté pression et le côté contre-pression, et
dans lequel au moins un épaulement (22) et au moins une courbure concave (24) est réalisé sur au moins une paroi de liaison (20) à son extrémité située à distance de la tête de piston (12), vue dans la direction axiale de l'axe, et
dans lequel l'évidement à courbure concave à l'extrémité inférieure de la paroi de liaison s'étend plus loin en direction du fond de piston (12) du côté contre-pression que du côté pression, et
dans lequel au moins une paroi de jupe (16, 18) est élargie dans une direction s'éloignant du fond de piston (12).

10. Procédé selon la revendication 9,
**caractérisé en ce que**
le piston est traité thermiquement.

11. Procédé selon l'une quelconque des revendications 9 ou 10,
**caractérisé en ce que**
un noyau utilisé pour fabriquer le canal de refroidissement (40) présente du sable et/ou de la cire.

12. Procédé selon l'une quelconque des revendications 9 à 10,
**caractérisé en ce que**
un noyau utilisé pour fabriquer le canal de refroidissement (40) est revêtu.

13. Procédé selon l'une quelconque des revendications 9 à 12,
**caractérisé en ce que**
un noyau utilisé pour fabriquer le canal de refroidissement (40) est fabriqué par un procédé de fabrication par pression, additive ou générative.
